Europäisches Patentamt

European Patent Office

Office européen des brevets

(19)

(11) **EP 0 637 121 B1**

(12) **EUROPÄISCHE PATENTSCHRIFT**

(45) Veröffentlichungstag und Bekanntmachung des Hinweises auf die Patenterteilung:
**20.11.1996  Patentblatt 1996/47**

(51) Int Cl.⁶: **H02M 3/315**, B60L 9/30, H02M 7/757, G05F 3/16

(21) Anmeldenummer: **94111470.4**

(22) Anmeldetag: **22.07.1994**

(54) **Stromrichterschaltung zur Speisung eines Gleichspannungszwischenkreises**

Power converter assembly for the supply of an intermediate DC circuit

Ensemble de convertisseur pour l'alimentation d'un circuit intermédiaire en courant continu

(84) Benannte Vertragsstaaten:
**BE DE ES IT**

(30) Priorität: **28.07.1993  DE 4325275**

(43) Veröffentlichungstag der Anmeldung:
**01.02.1995  Patentblatt 1995/05**

(73) Patentinhaber: **ABB PATENT GmbH
D-68309 Mannheim (DE)**

(72) Erfinder: **Still, Ludwig
D-64683 Einhausen (DE)**

(74) Vertreter: **Rupprecht, Klaus, Dipl.-Ing. et al
c/o ABB Patent GmbH,
Postfach 10 03 51
68128 Mannheim (DE)**

(56) Entgegenhaltungen:
EP-A- 0 300 392          EP-A- 0 383 971
EP-A- 0 395 801          DE-A- 3 826 283
DE-B- 2 800 928          US-A- 4 336 584

**Beschreibung**

Die Erfindung bezieht sich auf eine Stromrichterschaltung zur Speisung eines Gleichspannungszwischenkreises gemäß dem Oberbegriff des Anspruchs 1 und dient vorzugsweise zur Anwendung bei Drehstromschienenfahrzeugen am 3kV Gleichstromfahrdraht, aber auch für Mehrsystemfahrzeuge am Gleichstrom/Wechselstromfahrdraht.

Schaltungen, die es ermöglichen, aus einem 3kV Gleichstromfahrdraht Drehstromverbraucher zu speisen, sind aus P. Appun und E. Reichelt "Mehrsystemlokomotiven - heutige technische Möglichkeiten der Realisierung" ETR 38 (1989), H. 4, Seite 195 bis 200, A. Fuchs "Die Antriebstechnik der S 252 der Spanischen Staatsbahnen RENFE", Elektrische Bahnen 11/91, Seite 378/62 bis 380/64 sowie aus M. Eisele "Die Zweikraft-Lokomotiven C 38 mit Drehstrom-Antriebstechnik für die Südafrikanischen Eisenbahnen Spoornet" ZEV+DET Glasers Analen 117 (1993) Nr. 2/3, Seite 70 bis 78 bekannt.

Weitere Schaltungen sind aus der EP-A-0 395 801 und der EP-A-0 300 392 bekannt.

Die vorstehend aufgeführten Schaltungen zur Speisung von Drehstromverbrauchern am 3kV Gleichstromfahrdraht lassen sich in zwei Hauptgruppen aufteilen:

Die erste Hauptgruppe betrifft Pulswechselrichter über ein Eingangsfilter direkt am Gleichstromfahrdraht: beispielsweise nach ETR.... Bild 4b (Reihenschaltung von zwei Zweipunktwechselrichtern) und Bild 7 (Dreipunktwechselrichter).

Die zweite Hauptgruppe betrifft Pulswechselrichter mit stabilisierter Zwischenkreisspannung, die über ein Eingangsfilter und Gleichstromsteller gespeist werden. Wie in ETR.... Bild 5, Elektrische Bahnen.... Bild 6 und ZEV+DET... Bild 5 gezeigt, werden sowohl Tiefsetzstellerschaltungen als auch Hochsetzstellerschaltungen verwendet.

Die vorstehend angeführten Schaltungen eignen sich zur Speisung von Drehstromverbrauchern sowohl aus dem Gleichstromfahrdraht als auch zur Speisung aus einem einphasigen Wechselstromfahrdraht.

Die Nachteile der Anordnungen gemäß erster Hauptgruppe bestehen in folgenden Punkten:

Der Wechselrichter ist aufwendig (ETR.... Bild 7 und 4b). Da das Gleichspannungsnetz im weiten Spannungsbereich schwankt, muß der komplette Umrichter für die maximal auftretende Spannung ausgelegt sein.

Die Maschinen sind aufwendiger wegen notwendiger erhöhter Isolation und bei ETR.... Bild 4b zusätzlich wegen der speziellen Wicklungen.

Die Speisung von Kleinverbrauchern durch separate Stromrichter ist mit hohem Aufwand verbunden, da diese Stromrichter auch für die extremen Netzspannungstoleranzen zu dimensionieren sind.

Die aktive Unterdrückung der durch den Pulswechselrichter hervorgerufenen störenden Netzstromoberschwingungen durch einen Gleichstromsteller ist nicht möglich.

Die Nachteile der Anordnungen gemäß zweiter Hauptgruppe (mit Vorsteller) bestehen in folgenden Punkten:

Je nach Schaltung müssen auch der Wechselrichter und die Maschinen für die maximal auftretende Netzspannung isoliert werden (bei ETR... Bild 5 nicht).

Es müssen sowohl eine eigene Eingangsfilterkapazität als auch eine eigene Zwischenkreiskapazität installiert werden (siehe ETR.... Bild 5, Elektrische Bahnen.... Bild 4 und ZEV+DET....Bild 5). Die Eingangsfilterkapazität ist im wesentlichen zur Erfüllung der Netzanforderung hinsichtlich niedriger Eingangsresonanzfrequenz, Mindesteingangsimpedanz, spezieller Netzrückwirkungsforderungen und zur Bereitstellung der Gleichstromstellerpulsleistung erforderlich. Die Zwischenkreiskapazität ist zur Lieferung der Kommutierungs-, Verzerrungs- und Verschiebungsblindleistung von Wechselrichtern und Verbrauchern, sowie zur Aufnahme der Gleichstromstellerpulsleistung notwendig.

Die getrennten Kapazitäten erfordern entsprechend separate Erfassungen und Schutzeinrichtungen.

Ein Teil der Schaltungen, wie z.B. die Schaltung in Elektrische Bahnen... ist nur attraktiv bei zwei Ausgangswechselrichtern.

Der Erfindung liegt die Aufgabe zugrunde, eine einfach aufgebaute Stromrichterschaltung zur Speisung eines Gleichspannungszwischenkreises der eingangs genannten Art anzugeben, mit der aus der toleranzbehafteten Fahrdrahtspannung eine stabilisierte Zwischenkreisspannung erzeugt wird, über die ein oder mehrere Wechselrichter mit den entsprechenden Verbrauchern gespeist werden können.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß der Netzfilterkapazitäts- und Zwischenkreiskapazitätsaufwand reduziert ist, da beide Kapazitäten (Eingangsfilter- und Zwischenkreiskapazität) in der Funktion in den Eingangsteilkapazitäten integriert sind und zusammenwirken. Der geregelte Zwischenkreis und der Wechselrichter liegen einseitig an Masse und sind - je nach verwendeter Schaltung - ebenso wie die angeschlossenen Verbraucher von der Isolation gegen Masse nur für die Spannung an einer Eingangsteilkapazität zu bemessen. Die Integration von Bremsstellern, die die Spannung an den Eingangsteilkapazitäten begrenzen, ist durch eine einfache Schaltungsergänzung mit nicht selbsttätig löschbaren Halbleiterschaltern (Thyristoren) möglich. Die Schaltung ist universell einsetzbar und läßt sich modular durch Parallelschaltung an beliebige Leistungen anpassen, ohne daß Vorteile verloren gehen. So ist die Schaltung für 3kV-Einsystembetrieb, Mehrsystembetrieb (Gleich- und Wechselstromfahrdraht) mit einem Wechselrichter pro Anlage (Gruppenantrieb) oder bei Einzelachsspeisung (mehrere Wechselrichter arbeiten parallel an einer Anlage) einsetzbar.

Vorteilhafte Ausgestaltungen der Erfindung sind in den Unteransprüchen gekennzeichnet.

Weitere Vorteile sind der nachfolgenden Beschreibung entnehmbar.

Die Erfindung wird nachstehend anhand der in der Zeichnung dargestellten Ausführungsformen erläutert. Es zeigen:

| | |
|---|---|
| Figur 1a | einen Einquadranten-Gleichstromsteller (2-Punktstellerschaltung) mit Energietransport vom Netz zum Wechselrichter, |
| Figur 1b | einen Zweiquadranten-Gleichstromsteller (2-Punktstellerschaltung) mit Energietransport in beiden Richtungen, |
| Figur 2a | einen Einquadranten-Gleichstromsteller (2-Punktstellerschaltung) mit Energietransport vom Netz zum Wechselrichter für eine höhere Zwischenkreisspannung, |
| Figur 2b | einen Zweiquadranten-Gleichstromsteller (2-Punktstellerschaltung) mit Energietransport in beiden Richtungen für eine höhere Zwischenkreisspannung, |
| Figur 3a | einen Zweiquadranten-Gleichstromsteller (3-Punktstellerschaltung) mit Energietransport in beiden Richtungen, |
| Figur 3b | einen Zweiquadranten-Gleichstromsteller (zusammengesetzt aus drei gleichen 2-Punktstellerschaltungen) mit Energietransport in beiden Richtungen, |
| Figur 4a | einen Bremszweig mit nicht selbsttätig löschbaren Halbleiterschaltern, |
| Figur 4b | einen Bremszweig mit selbsttätig löschbarem Halbleiterschalter, |
| Figuren 5 bis 8 | Ersatzschaltbilder für den Fahrbetrieb zur Erläuterung der Betriebsweise der Schaltung gemäß Figur 3a, |
| Figuren 8 bis 16 | Ersatzschaltbilder für kombinierte Netz- und Widerstandsbremse zur Erläuterung der Funktionsweise des Bremszweiges gemäß Figur 4a, |
| Figur 17 | eine Grundschaltung für Mehrsystembetrieb am (insbesondere 3kV) Gleich- und Wechselstromfahrdraht. |

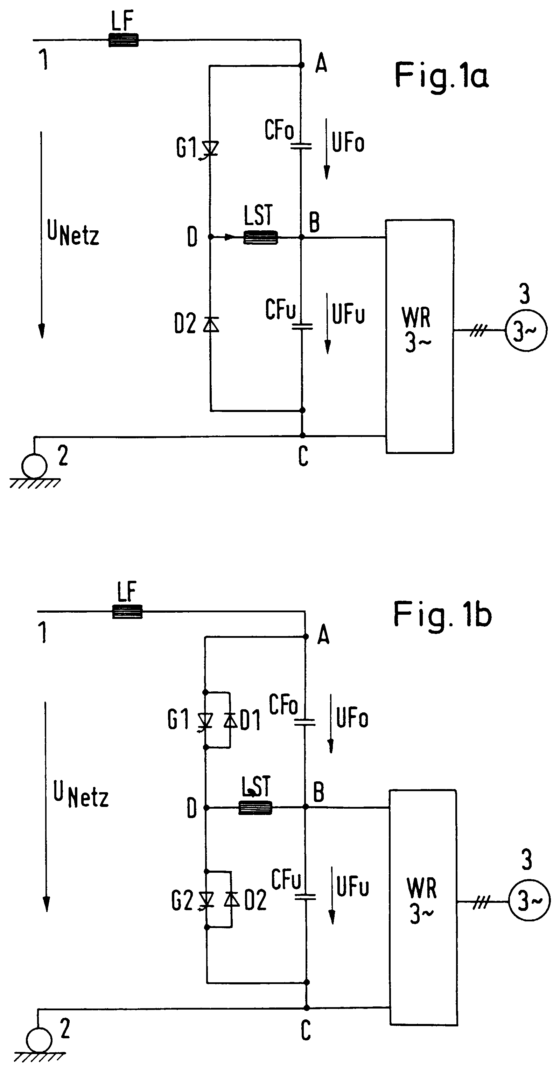

In Figur 1a ist ein Einquadranten-Gleichstromsteller mit Energietransport vom Netz zum Wechselrichter dargestellt. Die Netzspannung UNetz (= Fahrdrahtspannung = Eingangsspannung) liegt zwischen Fahrdraht 1 (allgemein: positiver Netzanschluß) und Rad/Schiene-System 2 (allgemein: negativer Netzanschluß, Masse) an. Der Fahrdraht 1 ist über eine Filterdrossel LF mit einem Anschlußpunkt A verbunden, an dem ein selbsttätig löschbarer Halbleiterschalter G1 und eine Eingangsteilkapazität CFO liegen. CFO ist andererseits mit einem Anschlußpunkt B verbunden, an dem eine Stellerdrossel LST, eine Eingangsteilkapazität CFU und der positive Gleichanschluß des Wechselrichters WR liegen. G1 ist andererseits mit einem Anschlußpunkt D verbunden, an dem der weitere Anschluß von LST sowie eine Diode D2 liegen. CFU, D2 und der negative Gleichanschluß von WR liegen andererseits über einem Anschlußpunkt C am Rad/Schiene-System 2. WR ist drehstromseitig (Wechselanschlüsse) mit einer Drehstrommaschine 3 (Antriebsmotor für Schienenfahrzeug) verbunden. Die Spannung an CFO beträgt UFO und die Spannung an CFU beträgt UFU.

Der Gleichstromsteller gemäß Figur 1a wandelt die variable Netzspannung UNetz in eine konstante und kleinere Spannung UFU = UD um, wobei UD die Zwischenkreisspannung bezeichnet. Der geregelte Zwischenkreis und der Wechselrichter sind vorteilhaft hinsichtlich der Isolation gegen Masse nur für UFU = UD zu bemessen.

In Figur 1b ist ein Zweiquadranten-Gleichstromsteller mit Energietransport in beiden Richtungen dargestellt. Zusätzlich zur Schaltung gemäß Figur 1a liegen eine Diode D1 parallel zu G1 sowie ein selbsttätig löschbarer Halbleiterschalter G2 parallel zu D2. Die übrige Anordnung und die Vorteile sind wie unter Figur 1a beschrieben.

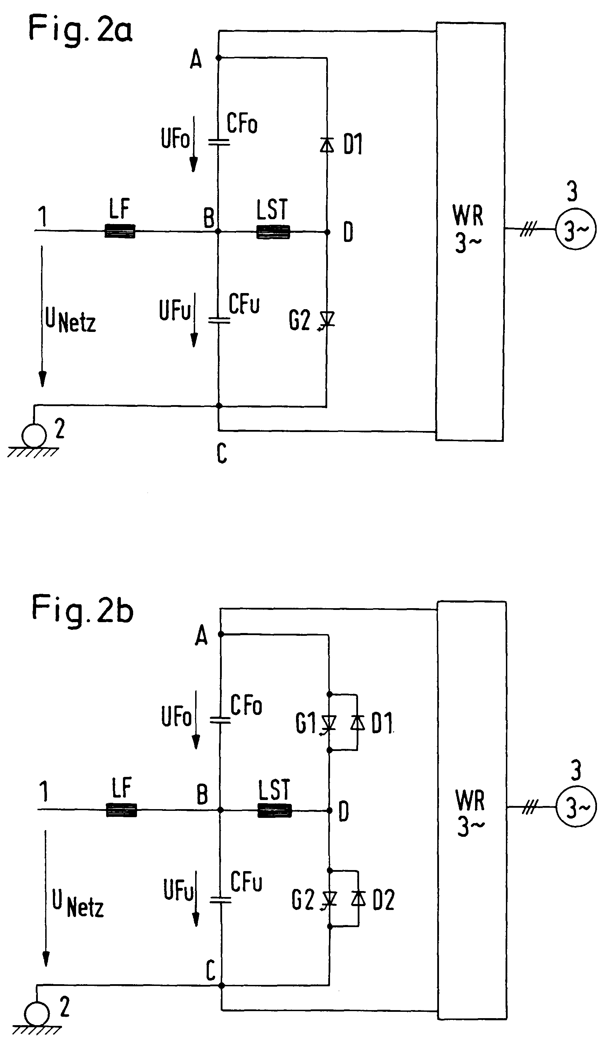

In Figur 2a ist ein Einquadranten-Gleichstromsteller mit Energietransport vom Netz zum Wechselrichter zur Erzeugung einer höheren Zwischenkreisspannung dargestellt. Wie bei den Figuren 1a, 1b und bei allen weiteren Schaltungen gemäß den Figuren 2b, 3a, 3b, 17 ist wiederum die Grundanordnung einer Eingangsteilkapazität CFO zwischen A und B, einer Eingangsteilkapazität CFU zwischen B und C und einer Stellerdrossel LST zwischen B und D vorgesehen, wobei an C das Rad/Schiene-System 2 sowie der negative Gleichanschluß (Masseanschluß) des Wechselrichters WR liegen. Diese Grundanordnung CFO/CFU/LST und insbesondere die Aufteilung der Eingangskapazität in zwei reihengeschaltete Eingangsteilkapazitäten CFO, CFU, die die Funktionen einer Eingangsfilterkapazität und einer Zwischenkreiskapazität ausüben, ist tragendes Merkmal aller Anordnungen.

Bei der Schaltung gemäß Figur 2a liegt D1 zwischen A und D sowie G2 zwischen D und C. Der positive Gleichanschluß von WR ist mit A verbunden. Der Fahrdraht 1 liegt über LF an B. Der Gleichstromsteller wandelt die variable Netzspannung UNetz in eine konstante und höhere Zwischenkreisspannung um: UD = UFU + UFO = konstant.

In Figur 2b ist ein Zweiquadranten-Gleichstromsteller mit Energietransport in beiden Richtungen für eine höhere Zwischenkreisspannung dargestellt. Zusätzlich zur Schaltung gemäß Figur 2a liegen G1 parallel zu D1 sowie D2 parallel zu G2. Die übrige Anordnung ist wie unter Figur 2a beschrieben.

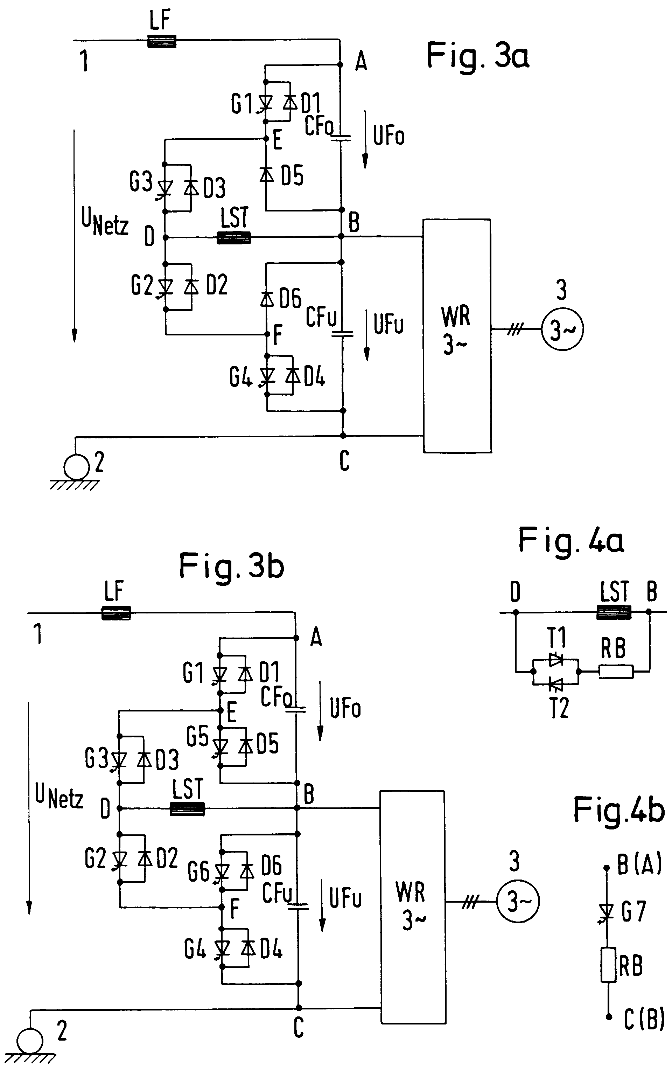

In Figur 3a ist ein Zweiquadranten-Gleichstromsteller (3-Punktstellerschaltung) mit Energietransport in beiden Richtungen dargestellt. Wie bei der Schaltung gemäß Figur 1b liegt der Fahrdraht 1 über LF an A der Grundanordnung CFO/CFU/LST und der positive Gleichanschluß von WR ist mit B verbunden. Zusätzlich zur Schaltung gemäß Figur 1b liegt G1/D1 die Parallelschaltung eines weiteren selbsttätig löschbaren Halbleiterschalters G3 mit einer Diode D3 zwischen A und D in Reihe. In gleicher Art und Weise liegen zwischen D und C zwei Parallelschaltungen G2/D2 und G4/D4 in Reihe, wobei G2, G4 wiederum selbsttätig löschbare Halbleiterschalter und D2, D4 Dioden bezeichnen. Der mit E bezeichnete Anschlußpunkt zwischen G1/D1 und G3/D3 ist über eine Diode D5 sowie der mit F bezeichnete Anschlußpunkt zwischen G2/D2 und G4/D4 ist über eine Diode D6 mit B verbunden.

Der Gleichstromsteller gemäß Figur 3a ist im Unterschied zum Gleichstromsteller gemäß Figur 1b für hohe Eingangsspannungen geeignet. Der geregelte Zwischenkreis und der Wechselrichter sind vorteilhaft hinsichtlich der Isolation gegen Masse nur für UD = UFU zu bemessen.

In Figur 3b ist ein ebenfalls für hohe Eingangsspannungen geeigneter Zweiquadranten-Gleichstromsteller (zusammengesetzt aus drei gleichen 2-Punktstellerschaltungen) mit Energietransport in beiden Richtungen dargestellt. Zusätzlich zur Schaltung gemäß Figur 3a liegen die selbsttätig löschbaren Halbleiterschalter G5 bzw. G6 parallel zu D5 bzw. D6. Die übrige Anordnung und die Vorteile sind wie unter Figur 3a beschrieben.

In Figur 4a ist ein Bremszweig mit nicht selbsttätig löschbaren Halbleiterschaltern dargestellt, wie er bedarfsweise bei allen Schaltungen zwischen D und B parallel zu LST einfügbar ist. Der Bremszweig besteht aus zwei antiparallel angeordneten, nicht selbsttätig löschbaren Halbleiterschaltern T1, T2 (Thyristoren) mit in Reihe angeordnetem Bremswiderstand RB.

In Figur 4b ist ein Bremszweig mit selbsttätig löschbarem Halbleiterschalter dargestellt, wie er bedarfsweise bei allen Schaltungen zwischen B und C parallel zu CFU und bedarfsweise zusätzlich zwischen A und B parallel zu CFO einfügbar ist. Der Bremszweig besteht aus einem selbsttätig löschbaren Halbleiterschalter G7 mit in Reihe liegendem Bremswiderstand RB.

Die vorstehend beschriebenen Grundschaltungen mit alternativen Ausgestaltungen werden durch folgende Merkmale bestimmt:

Die Eingangskapazität besteht aus der Reihenschaltung von zwei Teilkapazitäten CFO und CFU.

Die einseitig mit Masse verbundene Kapazität wird durch eine Gleichstromstellerschaltung und die Stellerdrossel LST auf einen fest vorgegebenen konstanten Wert gehalten.

Bei den Anordnungen gemäß Figuren 1a, 1b und 3a, 3b wird aus der variablen Netzspannung eine konstante und kleinere Zwischenkreisspannung UD = UFO erzeugt.

Bei den Anordnungen gemäß Figuren 2a und 2b wird aus der variablen Netzspannung eine konstante und höhere Zwischenkreisspannung erzeugt: UD = UFU+UFO.

Die Stromrichterschaltung kann im einfachsten Fall eine Anordnung mit 2-Punktschaltung sein (siehe Figuren 1a oder 1b). Für höhere Spannungen UFU+UFO ist die in Figur 3a bzw. 3b gezeigte 3-Punktschaltung geeignet.

Die Modifikationen und Schaltungsergänzungen sind durch folgende Merkmale gekennzeichnet:

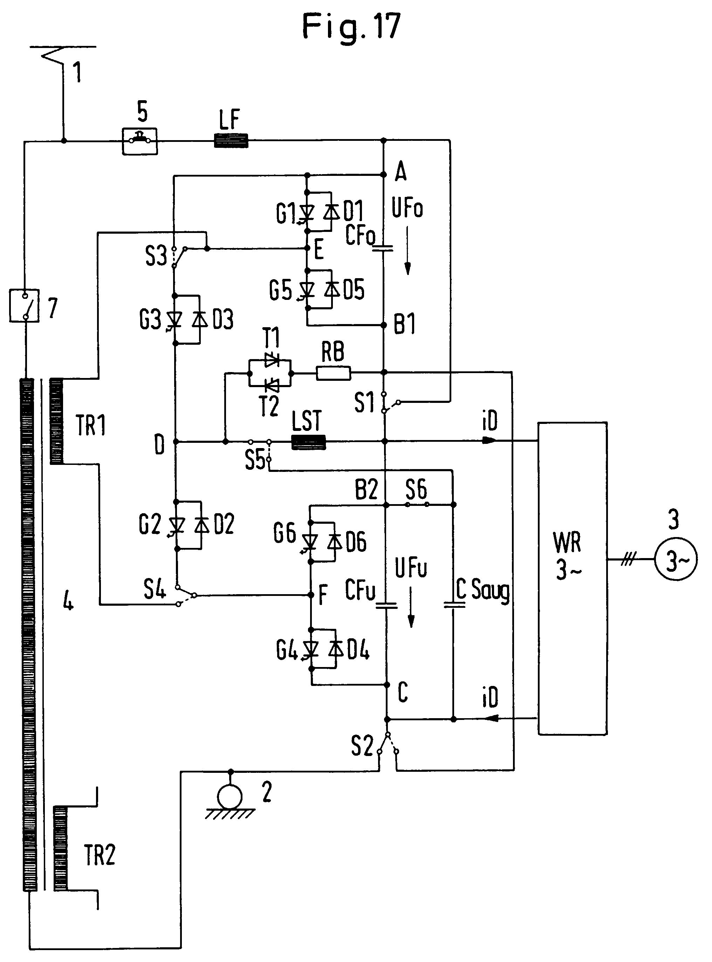

Eine 3-Punktschaltung nach Figur 3b, die sich aus drei 2-Punktphasen zusammensetzt. Bei Mehrsystembetrieb kann diese Grundschaltung durch Schaltgeräte so umgruppiert werden, daß sie als Eingangsstellglied (4q-S) am Wechselstromfahrdraht arbeitet (siehe hierzu Figur 17).

Zwischen Ausgang des Gleichstromstellers D und dem Teilungspunkt B der Eingangskapazität liegt bedarfsweise ein Bremswiderstand RB, der über nicht selbsttätig löschbare Halbleiter (Thyristoren) T1, T2 eingeschaltet werden kann und dadurch das Verhältnis beider Teilspannungen UFO und UFU einstellt.

Der Kapazität CFU oder auch beiden Kapazitäten CFU und CFO können separate Bremszweige nach Figur 4b mit selbsttätig löschbaren Halbleitern G7 parallelgeschaltet werden.

Zur Erhöhung der Leistungsfähigkeit können mehrere Gleichstromstellerschaltungen mit entsprechender Glättungsdrossel LST an den Punkten A, B und C parallelgeschaltet werden. Bei Mehrsystembetrieb werden die Gleichstromsteller/4q-S an den Punkten A/B1 bzw. B2/C parallelgeschaltet (siehe hierzu Figur 17). Die bei Mehrsystembetrieb notwendigen zusätzlichen Transformatorenwicklungen und Stellerdrosseln werden über Schaltgeräte mit den parallelgeschalteten Eingangsstellgliedern verbunden.

Im folgenden wird die Betriebsweise der 3-Punktstellerschaltung gemäß Figur 3a exemplarisch für die anderen Modifikationen mit Hilfe der Ersatzschaltbilder 5 bis 8 erläutert. Der Strom über LF ist mit iF, der Strom über WR ist mit iD und der Strom über LST ist mit iST bezeichnet. Die Induktivität von LST beträgt L.

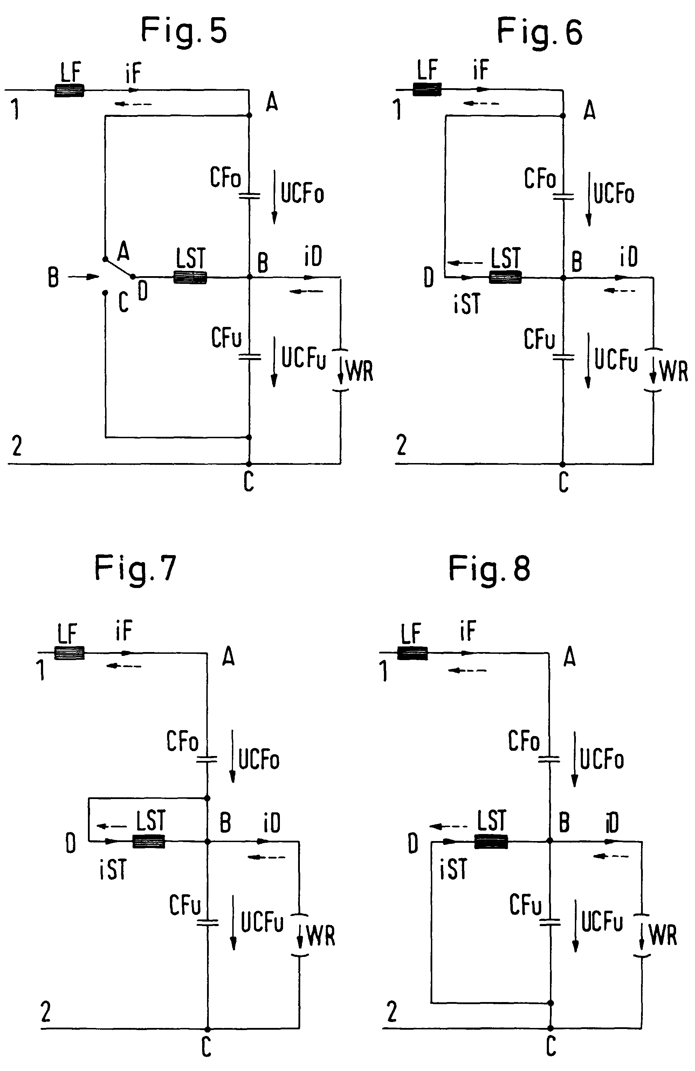

Der Energietransport erfolgt vom Netz über den Wechselrichter zu den Verbrauchern. Der Gleichstromsteller arbeitet als Tiefsetzsteller. Aus der variablen Eingangsspannung UNetz wird eine konstante und kleinere Zwischenkreisspannung UD = UFU erzeugt. Wie in den Figuren 5 bis 8 gezeigt, können drei Schaltzustände unterschieden werden.

Beim ersten Schaltzustand gemäß Figur 6 sind G1 und G3 leitend. An LST liegt die Spannung UFO. Der Strom iST steigt entsprechend an: diST/dt = UFO/L.

Beim zweiten Schaltzustand gemäß Figur 7 ist G1 gelöscht, der Strom iST fließt über G3 und D5. Die Spannung an LST ist Null.

Beim dritten Schaltzustand gemäß Figur 8 sind G1 und G3 gesperrt, der Strom iST fließt über D4 und D2. LST wird durch die Gegenspannung UFU entmagnetisiert.

Der Übergang vom ersten Schaltzustand gemäß Figur 6 zum dritten Schaltzustand gemäß Figur 8 und ebenso umgekehrt erfolgt über den Schaltzustand von Figur 7, wie das bei der 3-Punktschaltung wegen der Spannungsbelastung üblich ist. Für den reinen Einquadrantenbetrieb mit Energietransport vom Netz zu den Verbrauchern können G4 und G2 in Figur 3a entfallen (vgl. die Grundschaltung Figur la).

Im Bremsbetrieb arbeitet der Steller als Hochsetzsteller. Nach Zündung von G2 und G4 wird LST durch UFU aufmagnetisiert (Schaltzustand gemäß Figur 8 mit gestrichelt gezeichneter geänderter Stromrichtung). Nach Löschung von G4 erfolgt der Übergang in den Schaltzustand gemäß Figur 7 (mit gestrichelt gezeichneter Stromrichtung). Der Strom iST kann im Freilauf über G2 und D6 fließen. Durch Löschung von G2 wird der Schaltzustand gemäß Figur 6 erreicht (mit gestrichelt gezeichneter Stromrichtung), mit einem Stromfluß über D3 und D1.

Ist die Energieaufnahme des Netzes im Bremsbetrieb nicht sichergestellt, so sind auf dem Fahrzeug entsprechende Bremswiderstände vorzusehen, in denen die überschüssige Bremsenergie in Wärme umgesetzt wird. Bei modernen Fahrzeugen sind diese Widerstände getaktet, um eine stufenlose, verstellbare, kombinierte Netz-Widerstandsbremse zu ermöglichen.

Bei dem Modifikationsbeispiel mit Bremszweig gemäß Figur 4a ist parallel zu LST ein Bremszweig T1/T2/RB geschaltet. Die Besonderheit dieses Bremszweiges ist es, daß er aus einem oder auch aus zwei Bremswiderständen (jedem Halbleiterschalter T1, T2 ist ein Bremswiderstand zugeordnet) und zwei nicht selbsttätig löschbaren Halbleitern T1, T2 besteht. Diese nicht selbsttätig löschbaren Halbleiter werden automatisch gelöscht, wenn G1, G3 oder D1, D3 (Löschung von T2), bzw. G2, G4 oder D2, D4 (Löschung von T1), leitend werden. Der Vorteil dieses Bremszweiges nach Figur 4a ist der geringe Schaltungsaufwand gegenüber einem oder zwei Bremszweigen, die mit selbsttätig löschbaren Halbleiterschaltern und Überwachungseinrichtungen ausgestattet und parallel zu CFO bzw. parallel zu CFU angeordnet sind (siehe Figur 4b).

Die Funktionsweise des bei der Schaltung gemäß Figur 3a eingesetzten Bremszweiges gemäß Figur 4a wird nachfolgend anhand der Figuren 8 bis 16 beschrieben. Der Strom über RB beträgt iRB. Im Bremsbetrieb fließt der Strom iST in der Stellerdrossel LST entsprechend den eingezeichneten Zählpfeilen. Durch Zündung von G2 und G4 ergibt sich das Ersatzbild gemäß Figur 8 mit geänderter Stromführung (gestrichelt angedeutet), die Drossel LST wird aufmagnetisiert. Je nach Höhe der Netzrückspeiseleistung kann T2 gleichzeitig mit G2 und G4 oder aber entsprechend verspätet gezündet werden (siehe Figur 9). Über G2 und G4 fließt der Summenstrom iRB + iST.

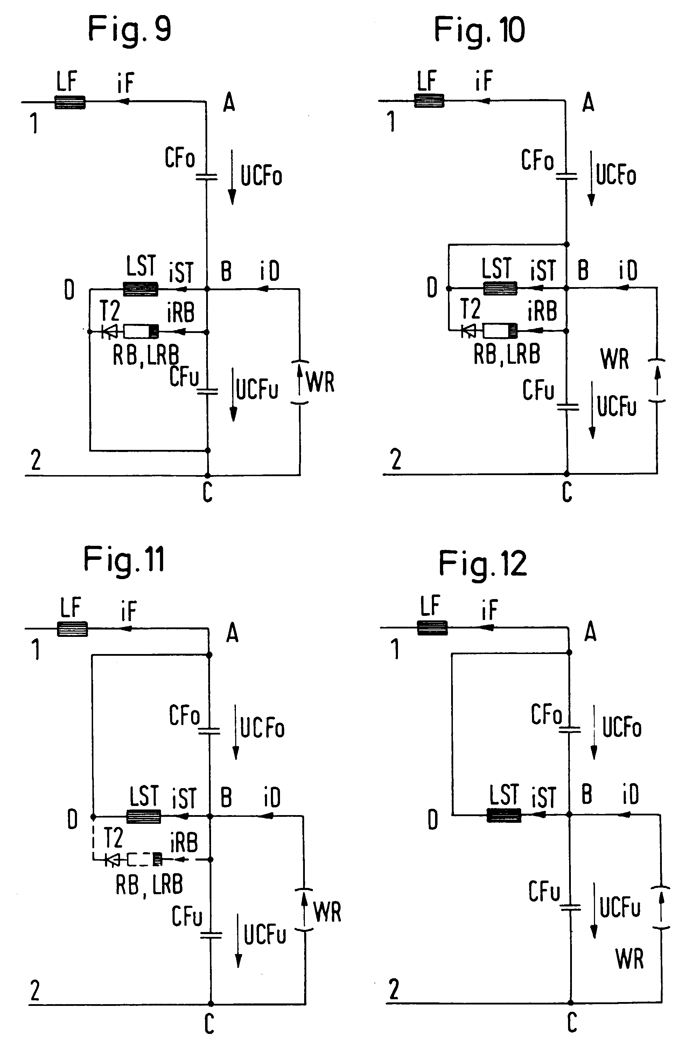

Nach Löschung von G4 ergibt sich das Ersatzschaltbild gemäß Figur 10. Der Drosselstrom iST fließt im Freilauf über G2 und D6 ohne Gegenspannung. Der Strom iRB im Bremszweig über RB und T2 nimmt exponentiell mit der Zeitkonstanten $\tau$ = LRB/R ab. LRB sind parasitäre Induktivitäten oder di/dt-Begrenzungsdrosseln und R bezeichnet den ohmschen Widerstandswert von RB.

Nach Löschung von G2 erfolgt der Übergang zum Ersatzschaltbild gemäß Figur 11, die Dioden D1 und D3 werden leitend. Am Bremszweig liegt die Spannung UFO, die den Reststrom iRB in T2 schnell zu Null werden läßt, was zu einem definierten Löschvorgang in T2 führt. Danach beginnt die Schonzeit für T2 und es gilt das Ersatzschaltbild gemäß Figur 12. Der Strom iST in der Stellerdrossel fließt weiter über D1 und D3.

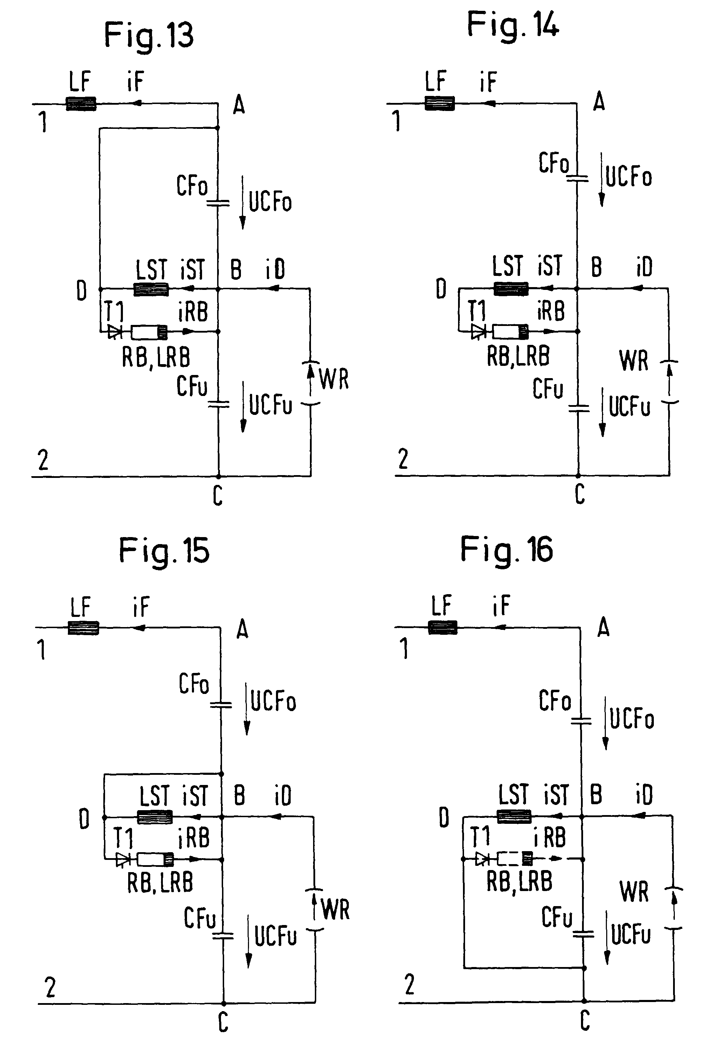

Je nach gewünschter Rückspeiseleistung können T1 sowie G1 und G3 verzögert eingeschaltet werden, so daß das Ersatzschaltbild gemäß Figur 13 erreicht wird.

Bei Zündung von T1 und gesperrten Halbleiterschaltern G3 und G1 fließt in RB der Strom iST (Ersatzschaltbild gemäß Figur 14, Annahme: iSt < UFO/R). Bei zusätzlicher Zündung von G1 und G3 ergibt sich iRB zu UFO/R. Über G1 und G3 fließt nur der Differenzstrom iRB-iST. Sollte der Differenzstrom kleiner als Null sein, so führen D1 und D3 den Differenzstrom.

Nach versetzter Löschung von G1 und G3 ergibt sich Ersatzschaltbild gemäß Figur 14, sofern iST · R < UFO ist. Ist der Ausdruck iSt · R > UFO, so bleibt Ersatzschaltbild gemäß Figur 13 gültig. Nach fest definierter Mindestzeit nach Löschung von G3 darf G2 gezündet werden und es ergibt sich das Ersatzschaltbild nach Figur 15. Die definierte Löschung von T1 erfolgt nach Zündung von G4 (Figur 16). Unmittelbar nach Löschung von T1 beginnt deren Schonzeit.

Die in Figur 17 dargestellte Schaltung zeigt eine mehrsystemfähige Grundschaltung für den Betrieb am (insbesondere 3kV) Gleichstromfahrdraht und am einphasigen Wechselstromfahrdraht und basiert auf der Schaltung gemäß Figur 3b. Die Schaltung ist insofern modifiziert, als mittels eines ersten Schaltgerätes S1 die Verbindung zwischen CFO und B auftrennbar ist (B wird in B1, B2 aufgespalten), mittels eines zweiten Schaltgerätes S2 die Verbindung zwischen C und dem Rad/Schienen-System 2 auftrennbar ist, mittels eines dritten Schaltgerätes S3 die Verbindung zwischen E und G3/D3 auftrennbar ist, mittels eines vierten Schaltgerätes S4 die Verbindung zwischen F und G2/D2 auftrennbar ist, mittels eines fünften Schaltgerätes S5 die Verbindung zwischen LST und D auftrennbar ist und mittels eines sechsten Schaltgerätes S6 ein zusätzlicher Saugkreiskondensator CSaug parallel zu CFU schaltbar ist.

Die in Figur 17 dargestellten Kontaktstellungen der Schaltgeräte S1....S6 zeigen die Gruppierung am 3kV Gleichstromfahrdraht. Der Fahrdraht 1 ist über einen Hauptschalter 5 für Gleichstromeinspeisung mit LF verbunden. Ein weiterer mit dem Fahrdraht 1 verbundener Hauptschalter 7 für Wechselstromeinspeisung ist geöffnet. S1...S5 sind derart geschaltet, daß sich die Schaltungskonfiguration gemäß Figur 3b inklusive Bremszweig gemäß Figur 4a ergibt. S6 ist geschlossen, um die Parallelschaltung von UFU und CSaug zu erzielen. Die Anschlußpunkte B1, B2 sind über S1 miteinander verbunden und entsprechen B gemäß Figur 3b (wobei B1 die Verbindung S1/CFO/G5/D5/RB und B2 die Verbindung S1/LST/WR/CFU/G6/D6 bezeichnen). Ein Bremszweig T1/T2/RB ist zwischen B1 und D angeordnet. Als Bremszweige können alternativ zum eingezeichneten Bremszweig gemäß Figur 4a auch ein oder zwei separate Zweige gemäß Figur 4b parallel zu CFU und/oder CFO eingesetzt werden.

Die Funktion der am Gleichstromfahrdraht betriebenen Schaltung ist wie vorstehend zur Schaltung gemäß Figur 3a beschrieben.

Durch Öffnen des Hauptschalters 5, Schließen des Hauptschalters 7, Öffnen des Schaltgerätes 6 und Umschaltung der Schaltgeräte S1....S5 wird die Gruppierung für Wechselstromeinspeisung eingestellt. Durch Schließen des Hauptschalters 7 wird die Primärwicklung eines Transformators 4 zwischen Fahrdraht 1 und Rad/Schienen-System 2 geschaltet.

Durch Umschalten von S1 und S2 werden CFU und CFO parallelgeschaltet und bilden gemeinsam die Zwischenkreiskapazität, an der der Wechselrichter liegt.

Durch Umschalten von S3 und S4 wird die Transformator-Sekundärwicklung TR1 an die Wechselstromeingänge E und F gelegt. Die beiden parallel zu CFO bzw. CFU an den Punkten A und B1 bzw. B2 und C liegenden Phasen G1/D1, G5/D5 bzw. G6/D6, G4/D4 arbeiten als ein Vierquadrantensteller (4q-S).

Durch die Umschaltung von S5 und S6 bilden LST und CSaug einen Saugkreis. Der Saugkreis ist auf die doppelte Netzfrequenz abgestimmt und nimmt die von der 4q-S-Eingangsgleichrichtung G1/D1, G5/D5, G6/D6, G4/D4 verursachte Pendelleistung auf.

Über die Umschaltung von S3 kann der Zweig G3,T1,RB als Bremszweig am Wechselstromfahrdraht genutzt werden.

Die Schaltung ist so aufgebaut, daß möglichst viele Komponenten für beide Systeme nutzbar sind. Werden Komponenten nur für ein System benötigt, so können einige Schaltgeräte, wie z.B. S3 und S6 entfallen. Wird der Bremszweig für Betrieb am Wechselstromfahrdraht nicht benötigt, so kann Schaltgerät S3 entfallen. G3, D3, eine Seite der Transformator-Sekundärwicklung TR1 und Punkt E sind dann fest verbunden.

Bei höherer Leistungsfähigkeit sind mehrere Eingangs stromrichter parallelgeschaltet.

Die parallelgeschalteten Gleichstromsteller/4q-S sind direkt an den Punkten A/B1 bzw. B2/C angeschlossen. Die zusätzlichen Transformator-Sekundärwicklungen TR2... und Stellerdrosseln sind über separate Schaltgeräte S3', S4' und S5' (nicht dargestellt) mit den parallelgeschalteten Eingangsstromrichtern verbunden.

Für alle Schaltungen gilt vorteilhaft, daß bei Einzelachs-Speisung mehrere Wechselrichter parallel an den Anschlußpunkten B, C bzw. B2, C arbeiten können.

In den vorstehend erläuterten Schaltungen wird stets vereinfachend von einer direkten Verbindung der Stromrichterventile zu den einzelnen Anschlußpunkten - insbesondere A und C - ausgegangen. In der Praxis ist es selbstverständlich, daß in diesen Verbindungen di/dt-Drosseln vorgesehen sind. Da diese di/dt-Drosseln keinen Einfluß auf die Schaltungsfunktionen haben,sind sie aus Gründen der Vereinfachung in den Figuren nicht dargestellt und bei der Funktionsbeschreibung nicht berücksichtigt.

**Patentansprüche**

1. Stromrichterschaltung, die als Gleichstromsteller arbeitet, zur Speisung eines Gleichspannungszwischenkreises für einen Gleichstromverbraucher, insbesondere Pulswechselrichter aus einem Gleichspannungsnetz, dadurch gekennzeichnet, daß zwischen dem positiven Netzanschluß (1) und dem negativen Netzanschluß (2) eine erste (CFO) und eine zweite Eingangsteilkapazität (CFU) in Reihe geschaltet sind, wobei am Verbindungspunkt (B) beider Kapazitäten eine Stellerdrossel (LST) und der positive Gleichanschluß des Gleichstromverbrauchers (WR) liegen und daß die Stellerdrossel andererseits über einen ersten selbsttätig löschbaren Halbleiterschalter (G1) mit der ersten Eingangsteilkapazität und über eine zweite Diode (D2) mit der zweiten Eingangsteilkapazität verbunden ist, an der auch der negative Gleichanschluß des Gleichstromverbrauchers liegt (Figur 1a).

2. Stromrichterschaltung nach Anspruch 1, dadurch gekennzeichnet, daß dem ersten selbsttätig löschbaren Halbleiterschalter (G1) eine erste Diode (D1) sowie der zweiten Diode (D2) ein zweiter selbsttätig löschbarer Halbleiterschalter (G2) antiparallel geschaltet sind (Figur 1b).

3. Stromrichterschaltung nach Anspruch 2, dadurch gekennzeichnet, daß der ersten Antiparallelschaltung die Antiparallelschaltung eines dritten selbsttätig löschbaren Halbleiterschalters (G3) und einer dritten Diode (D3) sowie der zweiten Antiparallelschaltung die Antiparallelschaltung eines vierten selbsttätig löschbaren Halbleiterschalters (G4) und einer vierten Diode (D4) in Reihe geschaltet sind, wobei der Verbindungspunkt (B) der Eingangsteilkapazitäten (CFO, CFU) über eine fünfte Diode (D5) mit dem Verbindungspunkt von erster und dritter Antiparallelschaltung sowie über eine sechste Diode (D6) mit dem Verbindungspunkt von zweiter und vierter Antiparallelschaltung verbunden ist (Figur 3a).

4. Stromrichterschaltung nach Anspruch 3, dadurch gekennzeichnet, daß fünfter (D5) bzw. sechster Diode (D6) ein fünfter (G5) bzw. sechster selbsttätig löschbarer Halbleiterschalter (G6) antiparallel geschaltet sind (Figur 3b).

5. Stromrichterschaltung, die als Gleichstromsteller arbeitet, zur Speisung eines Gleichspannungszwischenkreises für einen Gleichstromverbraucher, insbesondere Pulswechselrichter aus einem Gleichspannungsnetz, dadurch gekennzeichnet, daß der positive Netzanschluß (1) am Verbindungspunkt (B) einer ersten (CFO) und einer zweiten Eingangsteilkapazität (CFU) liegt, daß dieser Verbindungspunkt über eine Stellerdrossel (LST) und eine erste Diode (D1) am weiteren Anschluß der ersten Eingangsteilkapazität und am positiven Gleichanschluß des Gleichstromverbrauchers (WR) angeschlossen ist und daß dieser Verbindungspunkt ferner über diese Stellerdrossel und einem zweiten selbsttätig löschbaren Halbleiterschalter (G2) am weiteren Anschluß der zweiten Eingangsteilkapazität, am negativen Gleichanschluß des Gleichstromverbrauchers und am negativen Netzanschluß (2) angeschlossen ist (Figur 2a).

6. Stromrichterschaltung nach Anspruch 5, dadurch gekennzeichnet, daß der ersten Diode (D1) ein erster selbsttätig löschbarer Halbleiterschalter (G1) sowie dem zweiten selbsttätig löschbaren Halbleiterschalter (G2) eine zweite Diode (D2) antiparallel geschaltet sind (Figur 2b).

7. Stromrichterschaltung nach Anspruch 3 oder 4, dadurch gekennzeichnet, daß bei einem Mehrsystem mit Gleichstrom- und Wechselstromnetzanschlußmöglichkeit eine derartige Umgruppierung mit Hilfe von Schaltgeräten (S1....S6) erfolgt, daß vier je aus einem selbsttätig löschbaren Halbleiterschalter und einer antiparallelen Diode bestehende Antiparallelschaltungen einen Vierquadranten-Eingangssteller bilden, während die parallelgeschalteten Eingangsteilkapazitäten (CFO, CFU) zur Zwischenkreiskapazität zusammengefügt sind.

8. Stromrichterschaltung nach Anspruch 7, dadurch gekennzeichnet, daß die Reihenschaltung der Stellerdrossel (LST) mit einem Saugkreiskondensator (CSaug) einen Saugkreis bildet.

9. Stromrichterschaltung nach einem der Ansprüche 1 bis 8, gekennzeichnet durch einen aus zwei antiparallel angeordneten, nicht selbsttätig löschbaren Halbleiterschaltern (T1,T2) mit in Reihe angeordnetem Bremswiderstand (RB) bestehenden Bremszweig parallel zur Stellerdrossel (LST).

10. Stromrichterschaltung nach einem der Ansprüche 1 bis 9, gekennzeichnet durch einen aus einem selbsttätig löschbaren Halbleiterschalter (G7) mit in Reihe angeordnetem Bremswiderstand (RB) parallel zu mindestens einer Eingangsteilkapazität (CFO und/oder CFU).

**Claims**

1. Converter circuit, which operates as a DC controller, for supplying a DC intermediate circuit for a DC load, in particular a pulse invertor from a DC power supply, characterized in that a first input capacitance element (CFO) and a second input capacitance element (CFU) are connected in series between the positive power supply connection (1) and the negative power supply connection (2), a control inductor (LST) and the positive DC connection of the DC load (WR) being located at the junction point (B) of the two capacitances, and in that the control inductor is connected on the other hand via a first semiconductor switch (G1), which can be turned off automatically, to the first input capacitance element, and via a second diode (D2) to the second input capacitance element, at which the negative DC connection of the DC load is also located (Figure 1a).

2. Converter circuit according to Claim 1, characterized in that a first diode (D1) is connected in parallel with, and in opposition to, the first semiconductor switch (G1), which can be turned off automatically, and a second semiconductor switch (G2), which can be turned off automatically, is connected in parallel with, and in opposition to, the second diode (D2) (Figure 1b).

3. Converter circuit according to Claim 2, characterized in that the reverse-parallel circuit formed by a third semiconductor switch (G3), which can be turned off automatically, and a third diode (D3) is connected in series with the first reverse-parallel circuit, and the reverse-parallel circuit formed by a fourth semiconductor switch (G4), which can be turned off automatically, and a fourth diode (D4) is connected in series with the second reverse-parallel circuit, the junction point (B) of the input capacitance elements (CFO, CFU) being connected via a fifth diode (D5) to the junction point of the first and the third reverse-parallel circuit as well as via the sixth diode (D6) to the junction point of the second and the fourth reverse-parallel circuit (Figure 3a).

4. Converter circuit according to Claim 3, characterized in that a fifth diode (D5) and a sixth diode (D6), respectively, are connected in parallel with, and in opposition to, a fifth (G5) and a sixth (G6) semiconductor switch, which can be turned off automatically, respectively (Figure 3b).

5. Converter circuit, which operates as a DC controller, for supplying a DC intermediate circuit for a DC load, in particular a pulse invertor from a DC power supply, characterized in that the positive power supply connection (1) is located at the junction point (B) of a first input capacitance element (CFO) and of a second input capacitance element (CFU), in that this junction point is connected via a control inductor (LST) and a first diode (D1) to the further connection of the first input capacitance element and to the positive DC connection of the DC load (WR), and in that this junction point is furthermore connected via this control inductor and a second semiconductor switch (G2), which can be turned off automatically, to the further connection of the second input capacitance element, to the negative DC connection of the DC load and to the negative power supply connection (2) (Figure 2a).

6. Converter circuit according to Claim 5, characterized in that a first semiconductor switch (G1), which can be turned off automatically, is connected in parallel with, and in opposition to, the first diode (D1), and a second diode (D2) is connected in parallel with, and in opposition to, the second semiconductor switch (G2), which can be turned off automatically (Figure 2b).

7. Converter circuit according to Claim 3 or 4, characterized in that, in the case of a universal system having the capability to be connected to DC and AC power supplies, a regrouping is carried out with the aid of switching devices (S1....S6) such that four reverse-parallel circuits, which each comprise a semiconductor switch, which can be turned off automatically, and a reverse-parallel diode, form a four-quadrant input controller, while the parallel-connected input capacitance elements (CFO, CFU) are joined together to form the intermediate-circuit capacitance.

8. Converter circuit according to Claim 7, characterized in that the series circuit formed by the control inductor (LST) and a series-tuned circuit capacitor (CSaug) forms a series-tuned circuit.

9. Converter circuit according to one of Claims 1 to 8, characterized by a load path in parallel with the control inductor (LST), which load path comprises two semiconductor switches (T1, T2), which are arranged in reverse-parallel and cannot be turned off automatically, with a load resistor (RB) arranged in series.

10. Converter circuit according to one of Claims 1 to 9, characterized by a load path in parallel with at least one input capacitance element (CFO and/or CFU), which load path comprises a semiconductor switch (G7), which can be turned off automatically, with a load resistor (RB) arranged in series.

**Revendications**

1. Ensemble convertisseur, qui fonctionne comme convertisseur direct de courant continu, pour l'alimentation d'un circuit intermédiaire en courant continu pour un consommateur de courant continu, en particulier un onduleur d'impulsions d'un réseau à courant continu, caractérisé en ce qu'entre le branchement positif (1) au réseau et le branchement négatif (2) au réseau, une première (CFo) et une deuxième capacité partielle (CFu) d'entrée sont montées en série, un self du convertisseur (LST) et le branchement positif au courant continu d'un consommateur de courant continu (WR) étant reliés au point de connexion (B) et en ce que le self du convertisseur est relié d'autre part par un premier interrupteur (G1) à semi-conducteurs pouvant se bloquer automatiquement à la première capacité partielle d'entrée et par une deuxième diode (D2) à la deuxième capacité partielle d'entrée, à laquelle le branchement négatif au courant continu du consommateur de courant continu est également relié (figure 1a).

2. Ensemble convertisseur selon la revendication 1, caractérisé en ce qu'une première diode (D1) est mise tête-bêche avec premier interrupteur (G1) à semi-conducteurs pouvant se bloquer automatiquement et une deuxième diode (D2) avec un deuxième interrupteur (G2) à semi-conducteurs pouvant se bloquer automatiquement.

3. Ensemble convertisseur selon la revendication 2, caractérisé en ce que le montage tête-bêche d'un troisième interrupteur (G3) à semi-conducteurs pouvant se bloquer automatiquement et d'une troisième diode (D3) sont montés en série avec le premier montage tête-bêche et le montage tête-bêche d'un quatrième interrupteur (G4) à semi-conducteurs pouvant se bloquer automatiquement et d'une quatrième diode (D4) avec le deuxième montage tête-bêche, le point de connexion (B) des capacités partielles (CFo, CFu) étant relié par une cinquième diode (D5) avec le point de connexion du premier et du troisième montage tête-bêche et par une sixième diode (D6) avec le point de connexion du deuxième et du quatrième montage tête-bêche (figure 3a).

**4.** Ensemble convertisseur selon la revendication 3, caractérisé en ce qu'un cinquième (G5) ou un sixième interrupteur (G6) à semi-conducteurs pouvant se bloquer automatiquement sont mis tête-bêche avec une cinquième (D5) ou une sixième diode (D6) (figure 3b).

**5.** Ensemble convertisseur, qui fonctionne comme convertisseur direct de courant continu, pour l'alimentation d'un circuit intermédiaire en courant continu pour un consommateur de courant continu, en particulier un onduleur d'impulsions d'un réseau à courant continu, caractérisé en ce que le branchement positif au réseau (1) se trouve au point de connexion (B) d'une première (CFo) et d'une deuxième capacité partielle (CFu) d'entrée, en ce que ce point de connexion est connecté par un self du convertisseur (LST) et une première diode (D1) à l'autre branchement de la première capacité partielle d'entrée et au branchement positif au courant continu du consommateur de courant continu (WR) et en ce que ce point de connexion est en outre connecté par ce self du convertisseur et un deuxième interrupteur (G2) à semi-conducteurs pouvant se bloquer automatiquement à l'autre branchement de la deuxième capacité partielle d'entrée, au branchement négatif au courant continu du consommateur de courant continu et au branchement négatif au réseau (figure 2a).

**6.** Ensemble convertisseur selon la revendication 5, caractérisé en ce qu'un premier interrupteur (GI) à semi-conducteurs pouvant se bloquer automatiquement est mis tête-bêche avec une première diode (D1) et une deuxième diode (D2) est mise tête-bêche avec le deuxième interrupteur (G2) à semi-conducteurs pouvant se bloquer automatiquement (figure 2a).

**7.** Ensemble convertisseur selon la revendication 3 ou 4, caractérisé en ce que pour un système à polycourant avec possibilité de raccordement au réseau de courant continu et de courant alternatif, un tel regroupement est effectué à l'aide d'appareils de commutation (S1 ... S6), en ce que quatre montages constitués chacun d'un interrupteur à semi-conducteurs pouvant se bloquer automatiquement et d'une diode mis tête-bêche forment un convertisseur d'entrée à quatre quarts de cercle, tandis que les capacités partielles (CFo, CFu) d'entrée montées en parallèles sont réunies pour former la capacité du circuit intermédiaire.

**8.** Ensemble convertisseur selon la revendication 7, caractérisé en ce que le montage en série du self du convertisseur (LST) avec un condensateur (CSaug) de circuit d'absorption forme un circuit d'absorption.

**9.** Ensemble convertisseur selon une des revendications 1 à 8, caractérisé par un circuit de freinage, constitué d'une résistance de freinage (RB) montée en série avec de deux interrupteurs (T1, T2) à semi-conducteurs pouvant se bloquer automatiquement et mis tête-bêche, parallèle au self du convertisseur (LST).

**10.** Ensemble convertisseur selon une des revendications 1 à 9, caractérisé par une résistance de freinage (RB), montée en série avec un interrupteur (G7) à semi-conducteurs pouvant se bloquer automatiquement, parallèle à au moins une capacité partielle (CFo et/ou CFu) d'entrée.

Fig.1a

Fig. 1b

## Fig. 2a

## Fig. 2b

Fig. 3a

Fig. 3b

Fig. 4a

Fig. 4b

Fig. 5

Fig. 6

Fig. 7

Fig. 8

# Fig. 9

# Fig. 10

# Fig. 11

# Fig. 12

# Fig.13

# Fig.14

# Fig.15

# Fig.16

# Fig. 17